# EUROPEAN PATENT APPLICATION

(11) **EP 3 992 547 A1**
(43) Date of publication of application: **04.05.2022**
(21) Application number: 20832729.6
(22) Date of filing: 23.06.2020
(51) Int. Cl.: F25B 21/00, H01F 1/01

(54) **METHOD FOR MANUFACTURING HEAT ACCUMULATOR**

(30) Priority: 26.06.2019 US 201916452616
(71) Applicant: Haier Smart Home Co., Ltd., Qingdao, Shandong 266101 (CN); Haier US Appliance Solutions, Inc., Wilmington, DE 19801 (US)
(72) Inventor: SCHROEDER, Michael Goodman, Wilmington, Delaware 19801 (US)
(74) Representative: Lavoix
(86) International application number: PCT/CN2020/097677
(87) International publication number: WO 2020/259488

(57) **Abstract**

A method for forming a caloric regenerator includes depositing layers of additive material. The additive material includes a caloric material. The method also includes joining the layers of additive material to one another. After joining the layers of additive material, the caloric regenerator includes a regenerator body that extends longitudinally between a hot end portion and a cold end portion. A working fluid is flowable through the regenerator body between the hot and cold end portions of the regenerator body. The layers of additive material are deposited such that one or more of a cross-sectional area of the regenerator body, a void fraction of the regenerator body, a characteristic size of the caloric material, and a composition of the caloric material varies along a length of the regenerator body between the hot and cold end portions of the regenerator body.

## Description

### FIELD OF THE INVENTION

The present subject matter relates generally to caloric regenerators and methods for forming caloric regenerators.

### BACKGROUND OF THE INVENTION

Conventional refrigeration technology typically utilizes a heat pump that relies on compression and expansion of a fluid refrigerant to receive and reject heat in a cyclic manner so as to effect a desired temperature change or transfer heat energy from one location to another. This cycle can be used to receive heat from a refrigeration compartment and reject such heat to the environment or a location that is external to the compartment. Other applications include air conditioning of residential or commercial structures. A variety of different fluid refrigerants have been developed that can be used with the heat pump in such systems.

While improvements have been made to such heat pump systems that rely on the compression of fluid refrigerant, at best such can still only operate at about forty-five percent or less of the maximum theoretical Carnot cycle efficiency. Also, some fluid refrigerants have been discontinued due to environmental concerns. The range of ambient temperatures over which certain refrigerant-based systems can operate may be impractical for certain locations. Other challenges with heat pumps that use a fluid refrigerant exist as well.

Magneto-caloric materials (MCMs), i.e. materials that exhibit the magneto-caloric effect, provide a potential alternative to fluid refrigerants for heat pump applications. In general, the magnetic moments of MCMs become more ordered under an increasing, externally applied magnetic field and cause the MCMs to generate heat. Conversely, decreasing the externally applied magnetic field allows the magnetic moments of the MCMs to become more disordered and allow the MCMs to absorb heat. Some MCMs exhibit the opposite behavior, i.e. generating heat when the magnetic field is removed (which are sometimes referred to as para-magneto-caloric material but both types are referred to collectively herein as magneto-caloric material or MCM). The theoretical Carnot cycle efficiency of a refrigeration cycle based on an MCMs can be significantly higher than for a comparable refrigeration cycle based on a fluid refrigerant. As such, a heat pump system that can effectively use an MCM would be useful.

Challenges exist to the practical and cost competitive use of an MCM, however. In addition to the development of suitable MCMs, equipment that can attractively utilize an MCM is still needed. Currently proposed equipment may require relatively large and expensive magnets, may be impractical for use in e.g., appliance refrigeration, and may not otherwise operate with enough efficiency to justify capital cost.

### BRIEF DESCRIPTION OF THE INVENTION

Aspects and advantages of the invention will be set forth in part in the following description, or may be apparent from the description, or may be learned through practice of the invention.

In a first example embodiment, a method for forming a caloric regenerator includes depositing layers of additive material. The additive material includes a caloric material. The method also includes joining the layers of additive material to one another. After joining the layers of additive material, the caloric regenerator includes a regenerator body that extends longitudinally between a hot end portion and a cold end portion. A working fluid is flowable through the regenerator body between the hot and cold end portions of the regenerator body. The layers of additive material are deposited such that one or more of a cross-sectional area of the regenerator body, a void fraction of the regenerator body, a characteristic size of the caloric material, and a composition of the caloric material varies along a length of the regenerator body between the hot and cold end portions of the regenerator body.
In a second example embodiment, a method for forming a caloric regenerator includes depositing layers of additive material. The additive material includes a caloric material. The method also includes joining the layers of additive material to one another. After joining the layers of additive material, the caloric regenerator includes a regenerator body that extends longitudinally between a hot end portion and a cold end portion. A working fluid is flowable through the regenerator body between the hot and cold end portions of the regenerator body. The layers of additive material are deposited such that two or more of a cross-sectional area of the regenerator body, a void fraction of the regenerator body, a characteristic size of the caloric material, and a composition of the caloric material varies along a length of the regenerator body between the hot and cold end portions of the regenerator body.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a partial section view of a caloric regenerator according to an example embodiment of the present subject matter taken along the 1-1 of FIG. 2.
FIG. 2 is an end view of the example caloric regenerator of FIG. 1.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present subject matter is directed to a method for forming a caloric regenerator, e.g., that may be used in a heat pump system for heating or cooling an appliance, such as a refrigerator appliance. While described in greater detail below in the context of a magneto-caloric regenerator, one of skill in the art using the teachings herein will recognize that other suitable caloric materials may be used in a similar manner to heat or cool an appliance, i.e., apply a field, move heat, remove the field, move heat. For example, electro-caloric material heats up and cools down within increasing and decreasing electric fields. As another example, elasto-caloric material heats up and cools down when exposed to increasing and decreasing mechanical strain. As yet another example, baro-caloric material heats up and cools down when exposed to increasing and decreasing pressure. Such materials and other similar caloric materials may be used in place of or in addition to the magneto-caloric material described below to heat or cool an appliance. Thus, caloric material is used broadly herein to encompass materials that undergo heating or cooling when exposed to a changing field from a field generator, where the field generator may be a magnet, an electric field generator, an actuator for applying mechanical stress or pressure, etc.

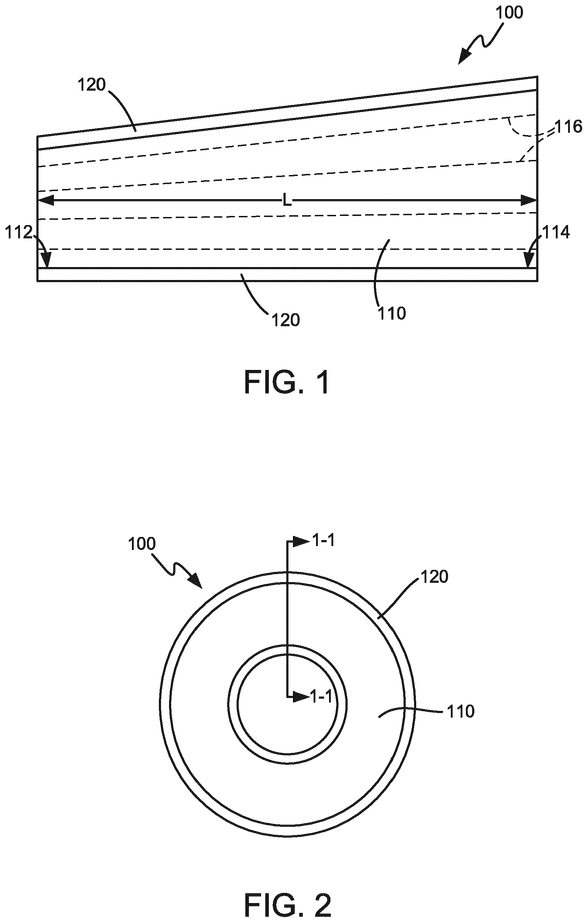

FIG. 1 is a partial section view of a caloric regenerator 100 according to an example embodiment of the present subject matter. FIG. 2 is an end view of caloric regenerator 100. With reference to FIGS. 1 and 2, caloric regenerator 100 includes a regenerator body 110 and a regenerator housing 120. Regenerator body 110 extends between a first end portion 112 and a second end portion 114. In particular, regenerator body 110 may be elongated between the first and second end portions 112, 114 of regenerator body 110 such that a length L of regenerator body 110 between first and second end portions 112, 114 may be greater than a width and thickness of regenerator body 110, e.g., that are perpendicular to the length L of regenerator body 110.

Heat transfer fluid may be flowable through regenerator body 110 between first and second end portions 112, 114 of regenerator body 110. Thus, regenerator body 110 may be permeable to heat transfer fluid, e.g., an aqueous heat transfer fluid. In certain example embodiments, first end portion 112 of regenerator body 110 may correspond to a hot end of regenerator body 110, e.g., such that the heat transfer fluid flowing from regenerator body 110 at first end portion 112 of regenerator body 110 rejects heat at an associated hot side heat exchanger. Thus, relatively hot heat transfer fluid may exit regenerator body 110 at first end portion 112 of regenerator body 110, and relatively cold heat transfer fluid may enter regenerator body 110 at first end portion 112 of regenerator body 110. Conversely, second end portion 114 of regenerator body 110 may correspond to a cold end of regenerator body 110, e.g., such that the heat transfer fluid flowing from regenerator body 110 at second end portion 114 of regenerator body 110 receives heat at an associated cold side heat exchanger. Thus, relatively cold heat transfer fluid may exit regenerator body 110 at second end portion 114 of regenerator body 110, and relatively hot heat transfer fluid may enter regenerator body 110 at second end portion 114 of regenerator body 110.

Regenerator body 110 is disposed within regenerator housing 120. As an example, regenerator housing 120 may encase or wrap regenerator body 110 such that regenerator housing 120 prevents the heat transfer fluid within regenerator body 110 from flowing out of regenerator body 110 except at first end portion 112 or second end portion 114 of regenerator body 110. Thus, regenerator housing 120 may be a suitable material that is impermeable to the heat transfer fluid, such as a suitable plastic, metal, etc.

Regenerator body 110 includes a caloric material that heats up and cools down in response to application and removal of a field. For example, regenerator body 110 may include a magneto-caloric material that heats up and cools down in response to application and removal of a magnetic field. Thus, portions of caloric regenerator 100 may be selectively exposed to a magnetic field, e.g., such that the magneto-caloric material in the regenerator body 110 rejects heat to the heat transfer fluid flowing through regenerator body 110 towards first end portion 112 of regenerator body 110 and/or such that the magneto-caloric material in the regenerator body 110 receives heat to the heat transfer fluid flowing through regenerator body 110 towards second end portion 114 of regenerator body 110. Regenerator body 110 may be porous such that the heat transfer fluid within caloric regenerator 100 contacts the caloric material within regenerator body 110 as the heat transfer fluid flows through regenerator body 110 between first and second end portions 112, 114 of regenerator body 110.

Regenerator body 110 may be additively formed, e.g., as a single monolithic component. In particular, regenerator body 110 may be formed by: (1) depositing layers of additive material which includes caloric material; (2) and joining the layers of additive material to one another. Thus, e.g., regenerator body 110 may be manufactured or formed using an additive process, such as Fused Deposition Modeling (FDM), Selective Laser Sintering (SLS), Stereolithography (SLA), Digital Light Processing (DLP) and other known processes. Such additive process fabricates regenerator body 110 using three-dimensional information, for example a three-dimensional computer model, of the component. The three-dimensional information is converted into a plurality of slices, each slice defining a cross section of the component for a predetermined height of the slice. The component is then "built-up" slice by slice, or layer by layer, until finished.

Accordingly, three-dimensional information of regenerator body 110 may be determined. As an example, a model or prototype of regenerator body 110 may be scanned to determine the three-dimensional information of regenerator body 110. As another example, a model of regenerator body 110 may be constructed using a suitable CAD program to determine the three-dimensional information of regenerator body 110. The three-dimensional information is converted into a plurality of slices that each define a cross-sectional layer of regenerator body 110. As an example, the three-dimensional information may be divided into equal sections or segments, e.g., along the length L of regenerator body 110 or any other suitable axis. Thus, the three-dimensional information may be discretized, e.g., in order to provide planar cross-sectional layers of regenerator body 110.

Regenerator body 110 is then fabricated using the additive process, or more specifically each layer may be successively formed, e.g., by fusing or polymerizing a binder, such as a suitable plastic, mixed with the caloric material using laser energy or heat. The layers may have any suitable size. For example, each layer may have a size between about five ten-thousandths of an inch and about one thousandths of an inch. Regenerator body 110 may be fabricated using any suitable additive manufacturing machine. For example, any suitable laser sintering machine, inkjet printer or laserjet printer may be used.

Regenerator body 110 is formed such that the caloric material within regenerator body 110 provides an advantageous efficiently improvement over known regenerators. For example, the layers of additive material may be deposited such that one or more of: (1) a cross-sectional area of regenerator body 110, e.g., in a plane that is perpendicular to the length L of regenerator body 110; (2) a void fraction of regenerator body 110; and (3) a characteristic size of the caloric material within regenerator body 110 varies, e.g., continuously and/or linearly, along the length L of regenerator body 110 between the first and second end portions 112, 114 of regenerator body 110.

As an example, during formation of regenerator body 110, the layers of additive material may be deposited such that the cross-sectional area of regenerator body 110, e.g., in a plane that is perpendicular to the length L of regenerator body 110, may increase, e.g., continuously and/or linearly, from first end portion 112 of regenerator body 110 to second end portion 114 of regenerator body 110. Thus, e.g., as shown in FIG. 1, regenerator body 110 may flare outwardly along the length L of regenerator body 110. As the cross-sectional area of regenerator body 110 increases, the flow rate of heat transfer fluid within regenerator body 110 may decrease. Thus, the heat transfer fluid within regenerator body 110 may dwell within regenerator body 110 longer towards second end portion 114 of regenerator body 110 relative to first end portion 112 of regenerator body 110. Such dwelling may be desirable to allow additional heat transfer between the heat transfer fluid and the caloric material at second end portion 114 of regenerator body 110.

As another example, during formation of regenerator body 110, the layers of additive material may be deposited such that the void fraction of regenerator body 110 may increase, e.g., continuously and/or linearly, from first end portion 112 of regenerator body 110 to second end portion 114 of regenerator body 110. The void fraction of regenerator body 110 may correspond to the fraction of the void volume within regenerator body 110 over the total volume of regenerator body 110 including voids and solids, e.g., within a cross-section of regenerator body 110 perpendicular to the length L of regenerator body 110. Heat transfer fluid is flowable through the voids within regenerator body 110 but not the solids. Thus, as the void fraction of regenerator body 110 increases, the flow rate of heat transfer fluid within regenerator body 110 may decrease. According, the heat transfer fluid within regenerator body 110 may dwell within regenerator body 110 longer towards second end portion 114 of regenerator body 110 relative to first end portion 112 of regenerator body 110 due to the increased void fraction of regenerator body 110 towards second end portion 114 of regenerator body 110. Such dwelling may be desirable to allow additional heat transfer between the heat transfer fluid and the caloric material at second end portion 114 of regenerator body 110.

As yet another example, during formation of regenerator body 110, the layers of additive material may be deposited such that a plurality of channels 116 extend along the length L of regenerator body 110. The working fluid is flowable through channels 116 between first and second end portions 112, 114 of regenerator body 110. A cross-sectional area of channels 116, e.g., in a plane that is perpendicular to the length L of regenerator body 110, may vary along the length L of regenerator body 110. In particular, the cross-sectional area of channels 116 may increase, e.g., continuously and/or linearly, from first end portion 112 of regenerator body 110 to second end portion 114 of regenerator body 110. As the cross-sectional area of channels 116 increases, the flow rate of heat transfer fluid within regenerator body 110 may decrease. According, the heat transfer fluid within regenerator body 110 may dwell within regenerator body 110 longer towards second end portion 114 of regenerator body 110 relative to first end portion 112 of regenerator body 110 due to the cross-sectional area of channels 116. Such dwelling may be desirable to allow additional heat transfer between the heat transfer fluid and the caloric material at second end portion 114 of regenerator body 110.

By forming regenerator body 110 in the manner described above, regenerator body 110 provides an advantageous efficiently improvement over known regenerators. For example, in known regenerators, discrete magneto-caloric material sections are stacked in a cascade between hot and cold ends of the regenerators to provide a suitable temperature range for the regenerators. Conversely, each adjacent layer of caloric material within regenerator body 110 may be selected to provide a smoother temperature gradient and generate less entropy compared to known stacked cascades. In particular, the caloric material within regenerator body 110 may be continuously graded (e.g., linearly or nonlinearly) between first and second end portions 112, 114 of regenerator body 110 to provide such benefit. In addition, as noted above the characteristic size (e.g., average circumference) of the caloric material within regenerator body 110 may vary, e.g., continuously and/or linearly, along the length L of regenerator body 110 between first and second end portions 112 to provide a smoother temperature gradient and/or generate less entropy compared to known stacked cascades.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for forming a caloric regenerator (100), comprising
depositing layers of additive material, the additive material comprising a caloric material; and
joining the layers of additive material to one another,
wherein, after joining the layers of additive material, the caloric regenerator (100) comprises a regenerator body (110) that extends longitudinally between a hot end portion and a cold end portion, and a working fluid is flowable through the regenerator body (110) between the hot and cold end portions of the regenerator body (110), and
wherein the layers of additive material are deposited such that one or more of a cross-sectional area of the regenerator body (110), a void fraction of the regenerator body (110), a characteristic size of the caloric material, and a composition of the caloric material varies along a length of the regenerator body (110) between the hot and cold end portions of the regenerator body (110).

2. The method of claim 1, wherein the caloric regenerator (100) is integrally formed as a single monolithic component.

3. The method of claim 1, wherein the layers of additive material are deposited such that one or more of the cross-sectional area of the regenerator body (110), the void fraction of the regenerator body (110), the characteristic size of the caloric material, and the composition of the caloric material vary continuously along the length of the regenerator body (110) between the hot and cold end portions of the regenerator body (110).

4. The method of claim 1, wherein the layers of additive material are deposited such that one or more of the cross-sectional area of the regenerator body (110), the void fraction of the regenerator body (110), the characteristic size of the caloric material, and the composition of the caloric material vary linearly along the length of the regenerator body (110) between the hot and cold end portions of the regenerator body (110).

5. The method of claim 1, wherein the additive material further comprises a binder, and the layers of additive material are joined to one another by activating the binder.

6. The method of claim 1, wherein the layers of additive material are deposited such that the cross-sectional area of the regenerator body (110) increases from the hot end portion of the regenerator body (110) to the cold end portion of the regenerator body (110).

7. The method of claim 1, wherein the layers of additive material are deposited such that the void fraction of the regenerator body (110) increases from the hot end portion of the regenerator body (110) to the cold end portion of the regenerator body (110).

8. The method of claim 1, wherein the regenerator body (110) defines a plurality of channels that extend along the length of the regenerator body (110) between the hot and cold end portions of the regenerator body (110), the working fluid flowable through the plurality of channels between the hot and cold end portions of the regenerator body (110).

9. The method of claim 8, wherein a cross-sectional area of the plurality of channels (116) varies along the length of the regenerator body (110) between the hot and cold end portions of the regenerator body (110).

10. A method for forming a caloric regenerator (100), comprising
depositing layers of additive material, the additive material comprising a caloric material; and
joining the layers of additive material to one another,
wherein, after joining the layers of additive material, the caloric regenerator (100) comprises a regenerator body (110) that extends longitudinally between a hot end portion and a cold end portion, and a working fluid is flowable through the regenerator body (110) between the hot and cold end portions of the regenerator body (110), and
wherein the layers of additive material are deposited such that two or more of a cross-sectional area of the regenerator body (110), a void fraction of the regenerator body (110), a characteristic size of the caloric material, and a composition of the caloric material varies along a length of the regenerator body (110) between the hot and cold end portions of the regenerator body (110).

11. The method of claim 10, wherein the caloric regenerator (100) is integrally formed as a single monolithic component.

12. The method of claim 10, wherein the layers of additive material are deposited such that two or more of the cross-sectional area of the regenerator body (110), the void fraction of the regenerator body (110), the characteristic size of the caloric material, and the composition of the caloric material vary continuously along the length of the regenerator body (110) between the hot and cold end portions of the regenerator body (110).

13. The method of claim 10, wherein the layers of additive material are deposited such that two or more of the cross-sectional area of the regenerator body (110), the void fraction of the regenerator body (110), the characteristic size of the caloric material, and the composition of the caloric material vary linearly along the length of the regenerator body (110) between the hot and cold end portions of the regenerator body (110).

14. The method of claim 10, wherein the additive material further comprises a binder, and the layers of additive material are joined to one another by activating the binder.

15. The method of claim 10, wherein the layers of additive material are deposited such that the cross-sectional area of the regenerator body (110) increases from the hot end portion of the regenerator body (110) to the cold end portion of the regenerator body (110).

16. The method of claim 10, wherein the layers of additive material are deposited such that the void fraction of the regenerator body (110) increases from the hot end portion of the regenerator body (110) to the cold end portion of the regenerator body (110).

17. The method of claim 10, wherein the regenerator body (110) defines a plurality of channels (116) that extend along the length of the regenerator body (110) between the hot and cold end portions of the regenerator body (110), the working fluid flowable through the plurality of channels (116) between the hot and cold end portions of the regenerator body (110).

18. The method of claim 17, wherein a cross-sectional area of the plurality of channels (116) varies along the length of the regenerator body (110) between the hot and cold end portions of the regenerator body (110).
